# EUROPÄISCHE PATENTSCHRIFT

(11) **EP 0 908 083 B1**
(45) Veröffentlichungstag und Bekanntmachung des Hinweises auf die Patenterteilung: **28.11.2001**
(21) Anmeldenummer: 98117228.1
(22) Anmeldetag: 11.09.1998
(51) Int. Cl.: A01B 71/08

(54) **Schutzvorrichtung für eine Gelenkwelle**
Articulated shaft protection device
Dispositif de protection pour arbre articulé

(30) Priorität: 08.10.1997 DE 19744314
(43) Veröffentlichungstag der Anmeldung: 14.04.1999
(73) Patentinhaber: GKN Walterscheid GmbH, 53797 Lohmar (DE)
(72) Erfinder: Coenen, Karl Dipl.-Ing., 53721 Siegburg (DE); Mikeska, Felix Ing., 53797 Lohmar (DE); Schott, Wilhelm Dipl.-Ing., 50996 Köln (DE)
(74) Vertreter: Harwardt, Günther, Dipl.-Ing.

(56) Entgegenhaltungen:
- EP-A- 0 641 946
- DE-C- 953 026
- FR-A- 1 355 853
- FR-A- 2 018 696
- US-A- 3 053 062
- US-A- 3 866 440

## Beschreibung

Die Erfindung betrifft eine Schutzvorrichtung für eine Gelenkwelle, insbesondere Kreuzgelenkwelle, die zwei Kreuzgelenke und eine diese verbindende, entlang einer Längsachse teleskopierbare Verbindungswelle umfaßt, mit je Kreuzgelenk einem Schutztrichter und dazwischen angeordneten, drehfest miteinander verbundenen und ineinander entlang der Längsachse verschiebbaren Schutzrohren, wobei jeweils ein Schutztrichter und ein Schutzrohr durch Anschlußmittel an einem Kreuzgelenk drehbar und axial unverschiebbar festgelegt sind, sowie mit an einem ersten der beiden Schutztrichter zugeordneten ersten Sicherungsmitteln, welche mit zur Befestigung am ortsfesten Teil einer Maschine oder dergleichen Bauteil bestimmten zweiten Sicherungsmitteln drehfest verbindbar sind.

Schutzvorrichtungen werden vorzugsweise im Zusammenhang mit Kreuzgelenkwellen eingesetzt, die zum Antrieb von landwirtschaftlichen Geräten durch die Zapfwelle des Traktors dienen und dazu mit einem Ende mit der Zapfwelle des Traktors verbindbar und mit dem anderen Ende an einem Antriebszapfen des Gerätes festgelegt sind. Die Schutzvorrichtung dient als Berührungsschutz für die darin rotierende Gelenkwelle. Um die Schutzvorrichtung festzulegen, kann sie beispielsweise über eine Kette mit einem Fixpunkt des Gerätes verbunden sein. Es ist jedoch auch bereits bekannt, einen der Schutztrichter mit seinem freien Ende mit einem Flansch zu versehen, von dem axial umfangsverteilte, mit Hinterschnitten versehene Sicherungszapfen vorstehen. Diese greifen in einen Schlitz eines Sicherungselementes ein, welches an dem Gerät festlegbar ist. Ferner weist das Sicherungselement einen trichterförmigen Abschnitt auf, der zur Vorzentrierung des Flansches des Schutztrichters dient. Dieser geht in einen zylindrischen Abschnitt über, in welchem der Flansch des Schutztrichters zentriert ist. Die von der Stirnfläche vorstehenden Sicherungszapfen sollen so auf die entsprechenden Öffnungen in einer radial verlaufenden Wand des Sicherungselementes zu geführt werden. Nachdem diese die entsprechenden Schlitze durchragen, kann durch Verdrehen des Schutztrichters eine Sicherung erfolgen. Von Nachteil hierbei ist, daß die Handhabung sich schwierig gestaltet, da aus der Bedienungsposition praktisch nicht einsehbar ist, ob sich die Sicherungszapfen im Eingriff befinden, und darüber hinaus muß die Drehstellung erst gefunden werden, die der Schutztrichter mit den Sicherungszapfen gegenüber den Schlitzen einnehmen muß. Eine Sicherheit, daß eine Verriegelung tatsächlich eingetreten ist, ist nicht gegeben, da aufgrund der Nachgiebigkeit des Schutztrichters in axialer Richtung kein eindeutiges Einrasten der Sicherungszapfen feststellbar ist.

Eine weitere Möglichkeit der Festlegung einer schutzvorrichtung ist aus der US-A-3053 062 bekannt.

Ziel der Erfindung ist es, einen Vollschutz für Gelenkwellen zu gewährleisten, so daß sämtliche Bauteile, die rotieren, vollständig überdeckt sind, wobei eine einfache und sichere Handhabung gegeben ist.

Dies Aufgabe wird erfindungsgemäß dadurch gelöst, daß die ersten Sicherungsmittel durch eine Hülse dargestellt sind, welche mit dem ersten Schutztrichter fest verbunden ist, daß die zweiten Sicherungsmittel durch einen Adapterring dargestellt sind und daß die Hülse und der Adapterring im montierten Zustand umeinander angeordnet und durch eine Längsverstellung beider zueinander zulassende und beide drehfest zueinander haltende Haltemittel verbunden sind.

Von Vorteil bei dieser Ausführung ist, daß aufgrund der Überdekkung zwischen Hülse und Adapterring ein leichtes Auffädeln möglich ist. Die in Eingriff zueinander zu bringenden Abschnitte sind für die Bedienungsperson im Blickfeld.

Eine bevorzugte Ausführungsform besteht darin, daß die Hülse mit einer Bohrung versehen ist, welche nach innen vorstehende Keilvorsprünge aufweist, die parallel zur Achse der Bohrung verlaufen, und daß der Adapterring auf seiner Außenfläche mit einer der Bohrung entsprechenden Kontur versehen ist und parallel zur Achse verlaufende Nuten aufweist, mit denen die Keilvorsprünge in Eingriff sind.

Die Nuten auf der Außenfläche des Adapterringes sind ohne weiteres zu erkennen, und damit gestaltet sich auch die Zuordnung der Keilvorsprünge einfach. Vorzugsweise ist die Hülse mit einer zylindrischen Außenfläche in einer zylindrischen Aufnahmebohrung eines Trichterabschnittes aufgenommen und mit diesem verbunden. Dabei ist zwischen beiden eine Verbindung durch Schrauben möglich, um so an Ort und Stelle eine Anpassung vorzunehmen. Einbaubedingte Längendifferenzen, die zu überbrücken sind, können hierdurch aufgenommen werden, da die Hülse in der Aufnahmebohrung des Trichtesabschnittes verschiebbar ist. Dies ist insbesondere für die Nachrüstung von Bedeutung. Ansonsten besteht jedoch auch die Möglichkeit, eine Verbindung durch Verklebung der Hülse mit dem Trichterabschnitt bzw. eine Verschweißung derselben zu wählen. Des weiteren ist auch die Möglichkeit gegeben, Vorsprünge und Vertiefungen zur Verbindung vorzusehen, die ineinanderrasten.

In Rahmen der axialen Überdeckung von Hülse und Adapterring ist eine Verschiebung derselben zueinander möglich. Um kein unbeabsichigtes Lösen eintreten zu lassen, ist des weiteren vorgesehen, den Adapterring zu seinem dem Schutztrichter nahen Ende außen mit mindestens einem radial zur Achse verlaufenden Vorsprung und die Hülse an ihrem freien Ende mit einem diesen hintergreifenden, radial nach außen gerichteten Sicherungsvorsprung zu versehen.

Vorzugsweise sind die Bauteile der Schutzvorrichtung aus einem Kunststoff hergestellt.

Die Festlegung des Adapterringes kann beispielsweise auf dem Getriebehals eines Getriebeeingangs im Bereich des aus dem Getriebehals vorragenden Antriebszapfens erfolgen.

Ein bevorzugtes Ausführungsbeispiel der Erfindung ist in der Zeichnung schematisch dargestellt.

Es zeigt
- Figur 1: eine Seitenansicht einer mit einer erfindungsgemäßen Schutzvorrichtung versehenen Gelenkwelle, halb in Ansicht, halb geschnitten,
- Figur 2: eine gegenüber Figur 1 vergrößerte Darstellung des durch den ersten Schutztrichter vollständig abgedeckten Kreuzgelenkes in Zuordnung zu einem Antriebszapfen mit Hülse und Adapterring und
- Figur 3: einen Schnitt III-III gemäß Figur 2.

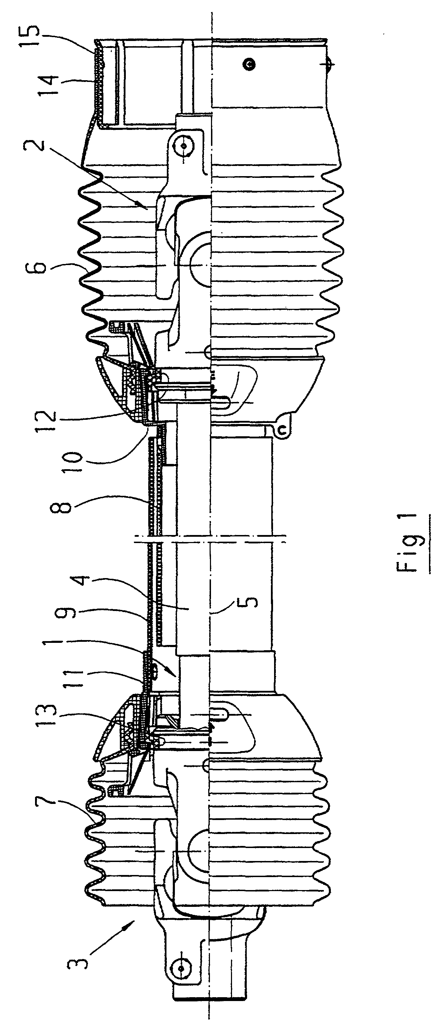

Aus Figur 1 ist die Gelenkwelle 1 ersichtlich, die als Kreuzgelenkwelle aufgebaut ist und ein erstes Kreuzgelenk 2 und ein zweites Kreuzgelenk 3 sowie eine beide verbindende Verbindungswelle 4 umfaßt. In der Darstellung sind sämtliche Bauteile auf der Längsachse 5 zentriert, d.h. die Kreuzgelenke 2, 3 sind im gestreckten Zustand dargestellt. Die Verbindungswelle 4 besteht beispielsweise aus zwei ineinander gesteckten Profilrohren, die eine Drehmomentübertragung zwischen den beiden Kreuzgelenken 2, 3 zulassen. Bei dem dargestellten Ausführungsbespiel ist ein Antrieb ausgehend von einem nicht ersichtlichen Zapfen über das zweite Gelenk 3 und die Verbindungswelle 4 auf das erste Gelenk 2 vorgesehen. Die Verbindungswelle 4 läßt Änderungen des Abstandes zwischen den beiden Kreuzgelenken 2 und 3 zu.

Da beispielsweise beim Antrieb eines landwirtschaftlichen Gerätes durch die Zapfwelle eines Traktors die Gelenkwelle in dem Zwischenraum freiliegt, ist eine Schutzvorrichtung der Gelenkwelle 1 zugeordnet. Diese umfaßt einen ersten Schutztrichter 6, der das erste Gelenk 2 vollständig überdeckt. Er weist hierzu einen zylindrischen Trichterabschnitt 14 als Verlängerung auf. Bei der Zuordnung beispielsweise des zweiten Kreuzgelenkes 3 zu einer Zapfwelle ist eine kürzere Ausführung des Schutztrichters 7 möglich, weil am Traktor in der Regel ein Schutzschild angeordnet ist, das bis über den Schutztrichter 7 reicht. Der erste Schutztrichter 6 ist mit einer Anschlußkappe 10 verbunden. Die Anschlußkappe 10 trägt darüber hinaus ein erstes Schutzrohr 8, das parallel zur Längsachse 5 ausgerichet ist und in ein zweites Schutzrohr 9 eingesteckt ist, welches mit der Anschlußkappe 11 verbunden ist, die darüber hinaus den zweiten Schutztrichter 7 trägt. Die erste Anschlußkappe 10 ist mittels eines Gleitringes 12 in einer Nut einer zum ersten Kreuzgelenk 2 gehörenden Gelenkgabel um die Längsachse 5 drehbar auf der Gelenkwelle 1 gehalten. In Längsrichtung, d.h. entlang der Längsachse 5 ist jedoch die Anschlußkappe 10 durch den Gleitring 12 zur Gelenkgabel festgelegt, so daß Längenbewegungen mit dieser ausgeführt werden müssen. Die beiden Schutzrohre 8, 9 sind aufgrund ihrer Formgebung drehfest miteinander in Eingriff. Das zweite Schutzrohr 9, das auf der zweiten Anschlußkappe 11 zusammen mit dem zweiten Schutztrichter 7 festgelegt ist, ist mittels eines zweiten Gleitringes 13 an eine zu dem zweiten Kreuzgelenk 3 gehörende Gelenkgabel um die Längsachse 5 drehbar, aber in Richtung der Längsachse 5 unverstellbar angeschlossen. Damit führen der erste Schutztrichter 6 und der zweite Schutztrichter 7 zusammen mit den zugehörigen Gelenken 2, 3 jeweils entsprechende Verstellbewegungen aus, und ihre beiden Schutzrohre 8 oder 9 tauchen entsprechend einer Verlängerung oder Verkürzung des Abstandes zwischen den beiden Kreuzgelenken 2, mehr oder minder tief ineinander ein.

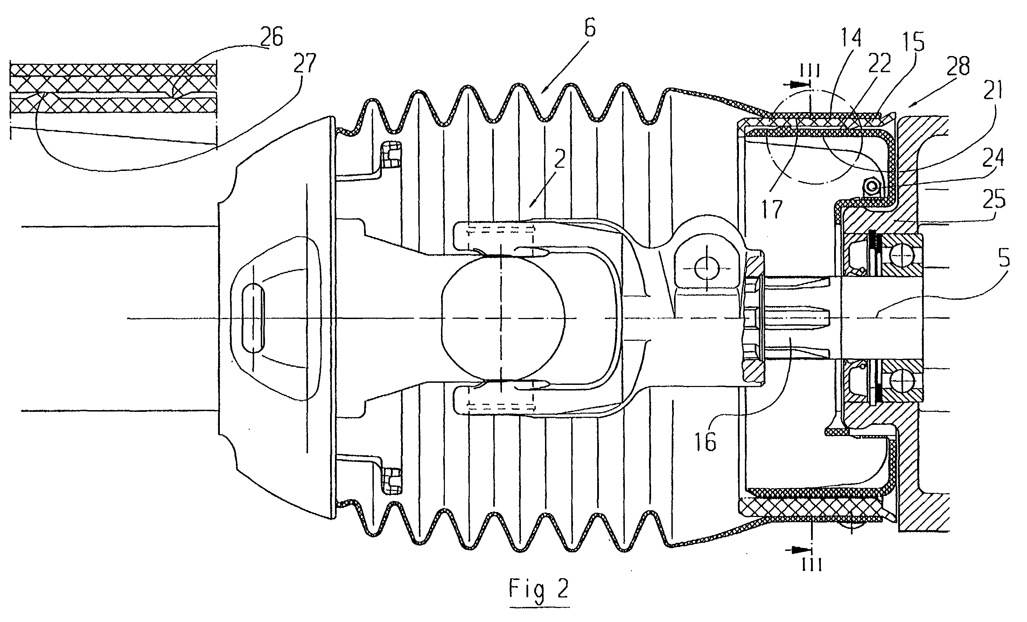

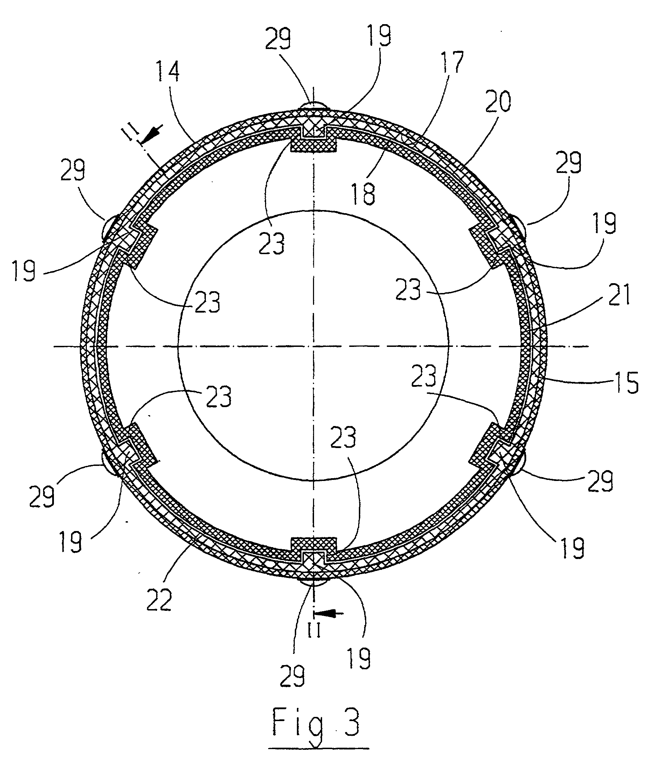

Der erste Schutztrichter 6 wird über die in den Trichterabschnitt 14 eingesetzte Hülse 15, welche anhand der Figuren 2 und 3 noch nachfolgend näher erläutert werden, im Drehsinne um die Längsachse 5 festgehalten. Aufgrund der festen Verbindung des Schutztrichters 6 über die erste Anschlußkappe 10 zum ersten Schutzrohr 8 und dessen drehfeste Verbindung zum zweiten Schutzrohr 9 und über die zweite Anschlußkappe 11 zum zweiten Schutztrichter 7 ist gewährleistet, daß die gesamte Schutzvorrichtung gegenüber der darin, beispielsweise um die Längsachse 5 rotierenden Gelenkwelle 1 feststeht, wenn die Hülse 15 festgelegt ist.

Aus den Figuren 2 und 3 ist die Ausbildung der Sicherungsmittel des ersten Schutztrichters 6 und deren Zusammenwirken mit zweiten Sicherungsmitteln, die beispielsweise dem landwirtschaftlichen Gerät zugeordnet sind, erkenntlich.

Insbesondere ist aus Figur 2 erkenntlich, daß die äußere Gelenkgabel des ersten Kreuzgelenkes 2 auf einem Antriebszapfen 16 eines Gerätes aufsitzt. Der Einfachheit halber ist auch hier das Kreuzgelenk 2 in seiner gestreckten Lage dargestellt, so daß auch die Drehachse des Antriebszapfens 16 mit der Längsachse 5 übereinstimmt. Dies gilt auch für die Aufnahmebohrung 17 des Trichterabschnittes 14, in welchen die Hülse 15 mit ihrer Außenfläche 20, die zylindrisch gestaltet ist, eingesetzt ist. Je nach Anwendungsfall kann die Hülse 15 mehr oder weniger tief in den Trichterabschnitt 14 eintauchen. Sie ist mit diesem durch mehrere auf dem Umfang des Trichterabschnittes 14 verteilte und dessen Wandung durchgreifende Schrauben 29 verbunden. In der Bohrung 18 der Hülse 15 sind umfangsverteilt Keilvorsprünge 19 vorgesehen, die nach innen vorragen. Die Hülse 15 ist mit ihrer Bohrung 18 auf die Außenfläche 22 des Adapterringes 21 aufgeschoben gezeichnet. Der Adapterring 21 weist auf seiner Außenfläche 22 entsprechend den Keilvorsprüngen 19 der Hülse 15 umfangsverteilte Nuten 23 auf, in welche die Keilvorsprünge 19 eingreifen. Die Keilvorsprünge 19 und die Nuten 23 verlaufen parallel zur Längsachse 5. Der Adapterring 21 weist einen nach innen gerichteten Wandabschnitt auf und von diesem ausgehend einen weiteren Abschnitt, der hülsenartig gestaltet ist und dazu dient, über einen Getriebehals 25 geschoben zu werden. Des weiteren sind Fixiermittel 24, beispielsweise in Form eines Spannbandes, vorgesehen, um den Adapterring 21 auf dem Getriebhals 25 zu sichern. Hierzu kann er in dem hülsenartigen Bereich geschlitzt sein oder aber Vorsprüge aufweisen, die in eine umlaufende Nut im Getriebehals 25 eingreifen.

Die Verbindung zwischen der Hülse 15 und dem Adapterring 21 erlaubt auch eine Relativbewegung zwischen beiden entlang der Längsachse 5, um beispielsweise bei Abbeugen des ersten Gelenkes 2 eine Ausgleichsbewegung durchzuführen. Um nur ein wissentliches Abziehen des ersten Schutztrichters 6 von dem Adapterring 21 zu gewährleisten, weist der Adapterring 21 an seinem in die Hülse 15 eintauchenden Ende einen oder mehrere umfangsverteilte, radial nach außen vorspringende Vorsprünge 26 auf, während die Hülse 15 an ihrem freien Ende 28 mit radial nach innen entsprechend vorspringenden Sicherungswülsten 27 versehen ist, die gegen die Vorsprünge 26 anlaufen. Nur durch gezieltes Einwirken von Hand auf den Schutztrichter 6 können diese durch Verformung außer Anlage gebracht werden.

## Patentansprüche

1. Schutzvorrichtung für eine Gelenkwelle (1), insbesondere Kreuzgelenkwelle, die zwei Kreuzgelenke (2, 3) und eine diese verbindende, entlang einer Längsachse (5) teleskopierbare Verbindungswelle (4) umfaßt, mit je Kreuzgelenk (2, 3) einem Schutztrichter (6, 7) und dazwischen angeordneten, drehfest miteinander verbundenen und ineinander entlang der Längsachse (5) verschiebbaren Schutzrohren (8, 9), wobei jeweils ein Schutztrichter (6, 7) und ein Schutzrohr (8, 9) durch Anschlußmittel (10, 11, 12, 13) an einem Kreuzgelenk (2, 3) drehbar und axial unverschiebbar festgelegt sind, sowie mit an einem ersten der beiden Schutztrichter (6) angeordneten ersten Sicherungsmitteln, welche mit zur Befestigung am ortsfesten Teil einer Maschine oder dergleichen Bauteil bestimmten zweiten Sicherungsmitteln drehfest verbindbar sind,
**dadurch gekennzeichnet,**
**daß** die ersten Sicherungsmittel durch eine Hülse (15) dargestellt sind, welche mit dem ersten Schutztrichter (6) fest verbunden ist, daß die zweiten Sicherungsmittel durch einen Adapterring (21) dargestellt sind und daß die Hülse (15) und der Adapterring (21) im montierten Zustand umeinander angeordnet und durch eine Längsverstellung beider zueinander zulassende und beide drehfest zueinander haltende Haltemittel (19, 23) verbunden sind.

2. Schutzvorrichtung nach Anspruch 1,
**dadurch gekennzeichnet,**
**daß** die Hülse (15) mit einer Bohrung (18) versehen ist, welche nach innen vorstehende Keilvorsprünge (19) aufweist, die parallel zur Achse (5) der Bohrung (18) verlaufen, und daß der Adapterring (21) auf seiner Außenfläche (22) mit einer der Bohrung (18) entsprechenden Kontur versehen ist und parallel zur Achse (5) verlaufende Nuten (23) aufweist, mit denen die Keilvorsprünge (19) in Eingriff sind.

3. Schutzvorrichtung nach Anspruch 1,
**dadurch gekennzeichnet,**
**daß** die Hülse (15) mit ihrer zylindrischen Außenfläche (20) in einer zylindrischen Aufnahmebohrung (17) eines Trichterabschnittes (14) aufgenommen und mit dieser verbunden ist.

4. Schutzvorrichtung nach Anspruch 1,
**dadurch gekennzeichnet,**
**daß** der Adapterring (21) zu seinem dem Schutztrichter (6) nahen Ende außen mit mindestens einem radial zur Achse (5) verlaufenden Vorsprung (26) und die Hülse (15) an ihrem freien Ende (28) mit einem diesen hintergreifenden, radial nach außen gerichteten Sicherungsvorsprung (27) versehen ist.

## Claims

1. A protective device for a driveshaft (1), especially a universal-jointed driveshaft, which comprises two universal joints (2, 3) and a connecting shaft (4) which connects said joints and which is telescopic along a longitudinal axis (5), having, per universal joint (2, 3), a protective cone (6, 7) and protective tubes (8, 9), which protective tubes (8, 9) are arranged therebetween, which are connected to one another in a rotationally fast way and which are displaceable inside one another along the longitudinal axis (5), wherein one protective cone (6, 7) and one protective tube (8, 9) each are rotatably and axially immovably secured to a universal joint (2, 3), and having first securing means which are provided at a first protective cone of the two protective cones (6) and which are connectable in a rotationally fast way to second securing means intended to be fixed to the stationary part of a machine or a similar component,
**characterised in**
**that** the first securing means are provided in the form of a sleeve (15) which is firmly connected to the first protective cone (6), that the second securing means are provided in the form of an adapter ring (21), and, that, in the assembled condition, the sleeve (15) and the adapter ring (21) are arranged around one another and connected to one another by holding means (19, 23) which permit a longitudinal displacement of the sleeve (15) and the adapter ring (21) relative to one another and hold same in a rotationally fast way relative to one another.

2. A protective device according to claim 1,
**characterised in**
**that** the sleeve (15) is provided with a bore (18) comprising inwardly projecting wedge-like projections (19) which extend parallel to the axis (5) of the bore (18), and that the adapter ring (21), on its outer face (22), is provided with a contour corresponding to the bore (18), and comprises grooves (23) which extend parallel to the axis (5) and which are engaged by the wedge-like projections (19).

3. A protective device according to claim 1,
**characterised in**
**that** the sleeve (15), by means of its cylindrical outer face (20), is received in a cylindrical receiving bore (17) of a cone portion (14) and connected thereto.

4. A protective device according to claim 1,
**characterised in**
**that** the adapter ring (21), towards its end close to the protective cone (6), on the outside, is provided with at least one projection (26) which extends radially relative to the axis (5) and that the sleeve (15), at its free end (28), is provided with a radially outwardly extending securing projection (27) which engages behind the projection (26).

## Revendications

1. Dispositif de protection pour un arbre articulé (1), en particulier un arbre de transmission à joint de Cardan qui comprend deux joints de Cardan (2, 3) et un arbre de liaison (4) reliant ceux-ci et capable de télescoper le long d'un axe longitudinal (5), comportant pour chaque joint de Cardan (2, 3) un entonnoir protecteur (6, 7) et des tubes protecteurs (8, 9) interposés, reliés solidairement en rotation l'un à l'autre et en translation l'un dans l'autre le long de l'axe longitudinal (5), un entonnoir protecteur respectif (6, 7) et un tube protecteur respectif (8, 9) étant fixés en rotation et axialement immobiles sur un joint de Cardan (2, 3) par des moyens de raccordement (10, 11, 12, 13), et comportant des premiers moyens de blocage associés à un premier des deux entonnoirs protecteurs (6) et susceptibles d'être reliés solidairement en rotation à des seconds moyens de blocage destinés à la fixation sur une pièce stationnaire d'une machine ou d'un composant similaire, **caractérisé en ce que** les premiers moyens de blocage sont représentés par une douille (15) qui est solidaire du premier entonnoir protecteur (6), **en ce que** les seconds moyens de blocage sont représentés par une bague adaptatrice (21), et **en ce que** la douille (15) et la bague adaptatrice (21) sont disposées l'une autour de l'autre dans l'état monté et reliées l'une à l'autre par des moyens de maintien (19, 23) permettant une translation longitudinale l'une par rapport à l'autre et maintenant les deux solidairement en rotation l'une par rapport à l'autre.

2. Dispositif de protection selon la revendication 1, **caractérisé en ce que** la douille (15) est pourvue d'un perçage (18) qui comprend des saillies coniques (19) dépassant vers l'intérieur qui s'étendent parallèlement à l'axe (5) du perçage (18), et **en ce que** la bague adaptatrice (21) est pourvue, sur sa surface extérieure (22), d'un contour correspondant au perçage (18) et comprend des gorges (23) parallèles à l'axe (5) dans lesquelles s'engagent les saillies coniques (19).

3. Dispositif de protection selon la revendication 1, **caractérisé en ce que** la douille (15) est logée par sa surface extérieure cylindrique (20) dans un perçage de réception cylindrique (17) d'un tronçon d'entonnoir (14) et est reliée à celui-ci.

4. Dispositif selon la revendication 1, **caractérisé en ce que**, à son extrémité proche de l'entonnoir protecteur (6), la bague adaptatrice (21) est pourvue à l'extérieur d'au moins une saillie (26) s'étendant radialement par rapport à l'axe (5), et **en ce que** la douille (15) est pourvue, à son extrémité libre (28), d'une saillie de blocage (27) qui l'engage par l'arrière et qui est dirigée radialement vers l'extérieur.
